# EUROPÄISCHE PATENTSCHRIFT

(11) **EP 2 095 351 B1**
(45) Veröffentlichungstag und Bekanntmachung des Hinweises auf die Patenterteilung: **25.06.2014**
(21) Anmeldenummer: 07821284.2
(22) Anmeldetag: 12.10.2007
(51) Int. Cl.: G08G 1/16, B60K 31/00, G01S 13/93

(54) **SYSTEM ZUR BESTIMMUNG VON OBJEKTEN**
SYSTEM FOR DETERMINING OBJECTS
SYSTÈME DE DÉTERMINATION D'OBJETS

(30) Priorität: 13.10.2006 DE 102006049102
(43) Veröffentlichungstag der Anmeldung: 02.09.2009
(73) Patentinhaber: Continental Teves AG & Co. OHG, 60488 Frankfurt (DE); ADC Automotive Distance Control Systems GmbH, 88131 Lindau (DE)
(72) Erfinder: STRAUSS, Matthias, 64319 Pfungstadt (DE); PFEIFFER, Jürgen, 61479 Glashütten (DE); SWOBODA, Adam, 64521 Gross-Gerau (DE); RÜCK, Enrico, 04425 Taucha (DE); LÜKE, Stefan, 57462 Olpe (DE); HEINRICH, Stefan, 77855 Achern (DE); SEIFERT, Timo, 88239 Wangen (DE); BIRKE, Carsten, 60433 Frankfurt am Main (DE); BAIER, Robert, 64807 Dieburg (DE)
(74) Vertreter: Bobbert, Christiana
(86) Internationale Anmeldenummer: PCT/EP2007/060917
(87) Internationale Veröffentlichungsnummer: WO 2008/043852

(56) Entgegenhaltungen:
- EP-A- 1 462 823
- WO-A-2006/015894
- DE-A1- 10 258 756
- DE-A1-102005 005 720
- GB-A- 2 289 816
- US-A1- 2003 060 980

## Beschreibung

Die Erfindung betrifft das Gebiet der multimodalen Objekterkennung anhand eines Umfeldmodells im Straßenverkehr und betrifft insbesondere ein System mit den Merkmalen des Oberbegriffs des Anspruchs 1.

Systeme zur Vermeidung oder Milderung unfallbedingter Verletzungen wurden bislang im Wesentlichen getrennt und unabhängig von den Systemen entwickelt, die der Vermeidung von Unfällen dienen. Passive und aktive Sicherheit eines Fahrzeugs wurden voneinander unabhängig betrachtet.

Heute setzt sowohl die aktive als auch die passive Sicherheit auf elektronische Systeme wie das elektronische Stabilitätsprogramm (ESP), die Adaptive Cruise Control (ACC), Gurtstraffer und Airbags. Deren Potenzial ist allerdings erst dann vollständig nutzbar, wenn Informationen über den Fahrzustand, das Fahrzeugumfeld und den Fahrer selbst allen Subsystemen zur Verfügung stehen.

Der Effekt dieser Vernetzung führt zu einem verkürzten Anhalteweg (Reduced Stopping Distance, RSD). Im so genannten 30-Meter-Auto werden die Einzelsysteme der aktiven Sicherheit - Reifen, Fahrwerk und Bremse- zu einem optimierten Gesamtsystem verbunden. Dieses Gesamtsystem verkürzt nicht nur den Bremsweg auf 30 Meter, sondern auch den Anhalteweg - zusätzlich mit den Bestandteilen Reaktions- und Schwellweg signifikant.

Eine Verkürzung des Schwellwegs, der vom Zeitpunkt des ersten Bremspedalkontakts bis zum vollen Aufbau der Bremsleistung zurückgelegt wurde, brachte die elektrohydraulische Bremse (EHB) in Kombination mit einem Bremsassistenten (BA). Die EHB zeichnet sich durch einen besonders schnellen Druckaufbau aus.

Zur Verkürzung der Reaktionszeit wurde das Fahrzeuge in einem nächsten Schritt mit einem Bugradar ausgerüstet, das Abstand und Relativgeschwindigkeit zum voraus fahrenden Fahrzeug misst. Deuten diese auf eine Notsituation, leitet die aktivierte Adaptive Cruise Control (ACC) eine Fremdbremsung bis zum gesetzlichen Limit von 0,2 bis 0,3 g ein und fordert den Fahrer durch ein Signal zur Übernahme des Bremsvorgangs auf, falls diese Fremdbremsung nicht ausreicht. Übernimmt der Fahrer die Bremsaktivitäten, unterstützt ihn der erweiterte Bremsassistent (BA+), der die Umfeldinformationen mit dem Bremsbetätigungssignal des Fahrers vernetzt.

Diese Vernetzung von Abstands- und Bremsinformationen wirkt auch bei ausgeschaltetem ACC. Dieser erste Schritt der Vernetzung deckt schon einen großen Teil der Unfälle ab, bei denen sich das Fahrzeug zuvor in einer kritischen fahrdynamischen Situation befunden hatte.

Die DE 199 28 915 A1 offenbart ein Verfahren, mit dem die Sichtweite im Blickfeld eines Kraftfahrzeuges exakt bestimmbar ist, so dass der Fahrer mit Hilfe der Sichtweiteninformation zu einer angepassten Fahrweise veranlasst werden kann. Hierbei misst ein monokularer Videosensor den Kontrast eines von einem Radar- oder LIDAR-Sensor erfassten Objekts, und aus den vom Radar- oder LIDAR-Sensor und vom monokularen Videosensor gelieferten Messwerten wird die Sichtweite bestimmt. Alternativ dazu wird die Entfernung des mindestens einen Objekts und dessen Kontrast mittels eines binokularen Videosensors gemessen und anschliessend wird aus den Kontrast- und Entfernungsmess-werten die Sichtweite bestimmt. Ausser der Kontrastmessung erfolgt keine weitere Auswertung der vom Videosensor aufgenommenen Bilddaten. Des Weiteren erweist es sich als nachteilig, dass die für grössere Messbereiche geeigneten LIDAR-Sensoren mit steigender Entfernung zu einem Objekt die Ortsauflösung verlieren, womit eine Verschlechterung der Objekterkennung einhergeht

Die DE 10305861 offenbart eine Vorrichtung eines Kraftfahrzeuges zur räumlichen Erfassung einer Szene innerhalb und/oder ausserhalb des Kraftfahrzeuges mit einem mit einer elektronischen Detektionseinrichtung gekoppelten LIDAR-Sensor und einem mit einer Bildverarbeitungseinrichtung verbundenen Bildsensor zur Aufnahme und Auswertung von Bildern der Szene, wobei die Detektionseinrichtung und die Bildverarbeitungseinrichtung mit einem Rechner zur Ermittlung räumlicher Daten der Szene gekoppelt sind.

Aus der WO 03/006289 ist ein Verfahren zum automatischen Auslösen einer Verzögerung eines Fahrzeugs zur Verhinderung einer Kollision mit einem weiteren Objekt bekannt, bei dem in Abhängigkeit von Radar-oder Lidarsignalen oder Videosignalen Objekte im Kursbereich des Fahrzeugs detektiert sowie Bewegungsgrössen des Fahrzeugs erfasst werden. In Abhängigkeit von dem erkannten Objekt und der Bewegungsgrössen soll ein Gefährdungspotential bestimmt werden. Nach Maßgabe dieses Gefährdungspotentials sollen die Verzögerungsmittel in mindestens drei Zuständen betrieben werden. Darüber hinaus ist eine Verminderung der Folgen einer bevorstehenden Kollision mit einem weiteren Objekt vorgesehen, indem passive oder aktive Rückhaltesysteme aktiviert werden.

Bekannt sind Verfahren und Systeme, die auf einem Strahlsensor basierend, den der Fahrer in einer Gefahrensituation beim Einleiten einer Bremsung unterstützt, indem beim Loslassen des Gaspedals die Bremsanlage vorfüllen wird (Prefill), während der Zeit, in der der Fahrer keines der Pedale berührt eine leicht Verzögerung von bis zu 0,3g eingeleiten (Prebrake) wird, und bei einer Betätigung der Bremse durch den Fahrer der Bremsassistent aufgrund niedrigerer Schwellwerte früher eingreift.

Trotz der sehr hohen Leistungsfähigkeit der Systeme, ergeben sich systembedingte anwendungsspezifische Beschränkungen:
Stehende Fahrzeuge oder Gegenstände werden von den Strahlsensoren nicht erkannt. Hierdurch erfolgt nur eine Klassifizierung bezüglich der Strahlsensoreigenschaften des Objektes, jedoch nicht um welchen Gegenstand es sich tatsächlich handelt, und ob es sich überhaupt um einen Gegenstand auf der Straße, daneben, darunter oder darüber handelt. Aus dieser Situationsanalyse kann aufgrund der hohen Unsicherheit keine starken autonomen Bremsungen eingeleitet werden. Des Weiteren wird die Reichweite des Sensors ständig durch Fahrzeuge oder Gegenstände in der Umgebung begrenzt und der Reibwert, der für die Eingriffs und Warnstrategie von bedeutender Wichtigkeit ist, ist nicht von vornherein bekannt.

Die GB 2 289 816 A betrifft ein Hinderniserkennungssystem für ein Fahrzeug, das nicht nur die Erkennung des Abstands zu Objekten, sondern auch von deren Höhe ermöglicht, wodurch LKW von PKW unterschieden werden können.

Die EP 1 462 823 A1 offenbart eine Kollisionsprädiktionsvorrichtung und ein entsprechendes Verfahren, das einen Bildsensor und eine Millimeterwellen-Sensor zum separaten Erfassen von Objekten einsetzt. Eine Sensorverknüpfungseinheit bestimmt, ob ein vom Bildsensor und Millimeterwellen-Sensor detektiertes Objekt ein und dasselbe Objekt ist und schätzt eine Position des Objekts.

Die DE 10 2005 005 720 A1 beschreibt ein Fahrerassistenzsystem mit redundanter Entscheidungseinheit, die mindestens drei logisch aufeinander aufbauende Module aufweist, von denen mindestens eines mehrere redundante Teilmodule sowie eine Vergleichseinrichtung aufweist, die die Resultate der Teilmodule vor ihrer Weitergabe an ein Nachfolgemodul auf Konsistenz prüft.

Die US 2003/0060980 A1 offenbart ein integriertes Kollisionsprädiktions- und Sicherheitssystem mit einem Radar- oder Lidar-System zur Erfassung von entfernten Objekten in einem Erfassungsbereich und einem Bildsystem zur Bestätigung von entfernten Objekten im Erfassungsbereich. Ein Kontroller verarbeitet die Daten der Sensoren zur Objekterkennung zusammen mit Daten eines Fahrzeugdynamikdetektors und leitet abhängig von der Verarbeitung Gegenmaßnahmen zur Vermeidung von Kollisionen ein.

Der Erfindung liegt die Aufgabe zu zugrunde, ein einfaches, robustes System zur Unterscheidung von Objekten im Umfeld eines Fahrzeugs zur Verfügung zu stellen, um hierauf aufbauend zuverlässige Bremsstrategien abzuleiten.

Diese Aufgabe wird erfindungsgemäß durch ein System mit den Merkmalen des Anspruchs 1 gelöst.

Die Aufgabe wird gelöst durch ein System zur multimodalen Bestimmung von Objekten in einem vor und/oder hinter einem Fahrzeug liegenden Blickfeld, wobei mittels eines ersten Sensors 10 eine erste Umfeldererfassung 30 durchgeführt wird, das Sensorausgangssignal einem ersten Sensorsignalanalyseverfahren mit Objektauffindung 31 zugeführt wird, und mittels eines zweiten Sensors 20 eine weitere Umfelderfassung durchgeführt wird, das Sensorausgangssignal des zweiten Sensorausgangssignal 23 einem zweiten Sensorsignanalyseverfahrens mit Objektauffindung 41 zugeführt wird, wobei durch die Sensoren 10, 20 erfassten und durch die Sensorsignalanalyseverfahren 31, 41 ermittelten und bestimmten Objekt an ein Objektbestätigungs- und Situationsanalyse-Modul 42 zur Verifikation zugeführt werden, wobei zur Verifikation weitere Fahrzeuginformationen und die Fahrspurprädiktion (43) berücksichtigt werden, und das Objektbestätigungs- und Situationsanalyse-Modul (42) relevante Objekte (60) bestimmt, wobei durch die relevanten Objekte (60) und die Fahrerinformation (80) bei Erkennung einer Gefahrensituation durch den Gefahrenrechner (90) Maßnahmen zur Erhöhung der passiven Sicherheit (120) eingeleitet werden.

In einer vorteilhaften Ausgestaltung wir als erster Sensor 10 ein Radarsensor und der zweite Sensor ein visueller Sensor 20 eingesetzt, wobei die Sensoren unterschiedlichen Bereich des elektromagnetischen Wellespektrums erfassen und das System in einem Fahrerassistenzsystem mit Frontsensorik integriert wird.

Eine besonders vorteilhafte Ausgestaltung des Systems wird dadurch gestaltet, das der erste Sensor 10 ein Radarsensor und der zweite Sensor eine Kamera ist.

Besonders vorteilhaft ist, dass das System den Datenfluss zwischen den beiden Sensoren durch die Vorauswahl von relevanten Objekten im Radar minimiert. Durch die geringere zu bewertenden Datenmenge wird die Rechengeschwindigkeit zur Bestimmung von relevanten Objekten erheblich erhöht.

In einer besonders vorteilhaften Ausgestaltung der Erfindung erfolgt eine Anpassung der Erfassungsbereiche von Videokamera und Radar, wobei der ermittelte gemeinsame Erfassungbereich, der abzubildend und von Relevanz ist und von den Sensoren gemeinsam überwacht wird.

In einer weiteren Ausgestaltung wird erfolgt die Durchführung einer Bremsstrategie mit mindestens 0,3g mit einer Erhöhung der Verzögerung kurz vor dem Stillstand über die Sicherheitssysteme 120 erfolgt, wodurch das Gefühl einer Notbremsung erzeugt wird.

Diese Lösung hat den Vorteil, dass es sich bei der Erfindung um eine Zielbestätigung handelt, da die ermittelten Daten aus der Umfelderkennung überprüft, verifiziert und bestätigt werden, um die Sensoren gegenseitig zu ergänzen, wodurch die Datenübertragung zwischen den Sensoren einfach zu realisieren ist und keine hohen systemtechnischen Anforderungen gestellt werden müssen.

Weitere vorteilhafte Ausgestaltungen sind in den Unteransprüchen angegeben.

Bei der Erfindung handelt es sich um eine Zielbestätigung, da die ermittelten Daten aus der Umfelderkennung überprüft, verifiziert und bestätigt werden, um die Sensoren gegenseitig zu ergänzen, wobei die Datenübertragung bzw. Datenaustausch zwischen den Sensoren einfach zu realisieren ist und keine komplexen systemtechnischen Anforderungen zu erfüllen sind.

In einer vorteilhaften Ausgestaltung der Erfindung wird die Fahrbahnmarkierungen für eine verbesserte Situationsanalyse herangezogen.

Ein Ausführungsbeispiel der Erfindung ist in den Zeichnungen dargestellt und wird im folgenden näher beschrieben.

Es zeigen
Fig. 1 Eine Gesamtübersicht über das System gemäß der Erfindung

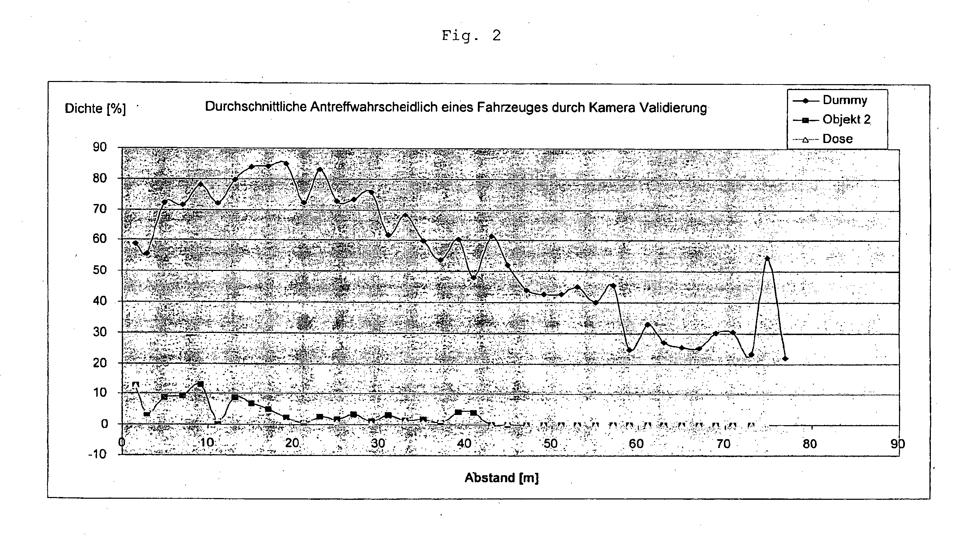

Fig. 2 Eine graphische Auswertung der mittlere Wahrscheinlichkeiten für ein Erkennung eines Fahrzeug

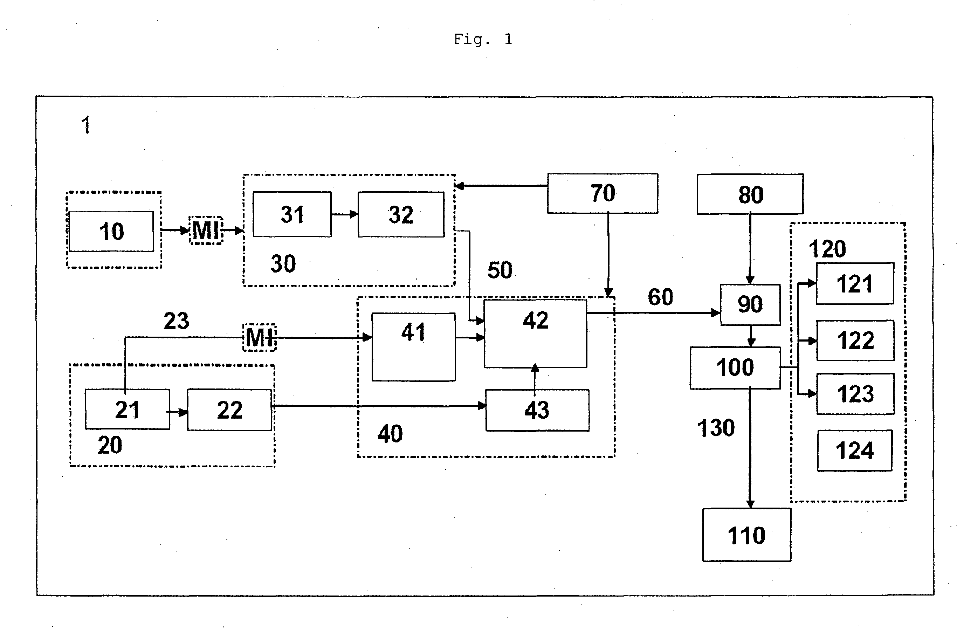

Das Grundprinzip der Erfindung liegt, wie in Fig. 1 dargestellt darin, dass der Radarsensor 10 zunächst eine Vorauswahl relevanter Ziele bzw. Objekte 60 durchführt. Die Position dieser Objekte wird direkt oder, wie in Fig. 1 gezeigt, der Kamera indirekt über eine Objektbestimmung und uns Situationsanalyse 42 gemeldet. Kann die Kamera in bestimmten Bereich ein Objekt als relevant klassifizieren, wird dieses als relevantes Ziel bzw. Objekt angenommen. Das Prinzip bei der Erkennung ist es, verschiedene optische Eigenschaften eines Fahrzeugs an der vom Radar 10 bestimmten Position im Blickfeld zu suchen, an der vom Radar 10 ein Ziel erkannt wurde. Je nach dem, ob viele oder nur wenige Eigenschaften erkannt wurden steigt oder somit die Erkennungsrate und somit die Wahrscheinlichkeit, dass es sich bei dem erkannten Objekt bspw. um ein Fahrzeug handelt.

Durch den Einsatz einer Radar-Nahbereichssensorik (24-GHz-Radar) 10 sind nicht nur Komfort-Funktionen wie Full-Speed-Range-ACC oder aktive Einparkhilfen mit Brems- und Lenkeingriff realisierbar, sondern auch verbesserte Sicherheitsfunktionen. Ein weiterer Schritt in Richtung mehr Sicherheit wird mit der Einführung von bildverarbeitenden Kamerasystemen 20 vollzogen. Sie erlauben neben der Detektion von Objekts auch deren Klassifizierung, was wiederum eine verbesserte Aktivierung von Sicherheitssystemen zur Folge hat.

Besonders vorteilhaft bei dem System ist, dass je größer ein Gegenstand ist, desto höher liegt die Wahrscheinlichkeit, dass es als Fahrzeug erkannt wird. Wird der Schwellwert sehr niedrig angesetzt, würde die Kamera Ziele in der Größe eines mittleren Kartons bestätigen. Zusätzlich steigt die Erkennungswahrscheinlichkeit des Radars mit dem Eisengehalt eines Objektes. Das heißt je größer und metallhaltiger ein Objekt ist, desto wahrscheinlicher ergibt sich ein autonomer Bremseneingriff, was dann dem Sachverhalt entspricht, dass es sich auch um eine potentiell gefährliche Situation handeln kann.

Das System wird vollständig in einem Fahrzeug 1 eingebaut. Der Radarsensor 10 besitzt eine sehr hohe longitudinale Auflösung. Erfindungsgemäß wird dieser durch einen Sensor 20 ergänzt, der über eine bereits erwähnte sehr hohe laterale Auflösung verfügt. Hierfür wird ein Videosensor 20 eingesetzt. Mit dem System werden vom Radar 10 erkannte Objekte durch das Objektracking 31 erfaßt und durch die Situationsanalyse 32 klassifiziert. Die Objektauffindung für den Sensor 10enthält drei Bestandteile. Aus den Sensordaten des Radars 10 werden zunächst Objekte detektiert und gebildet. Gefundene Objekte werden zugeordnet und über die Zeit verfolgt. Neben den direkt messbaren Objektattributen wie Größe, Entfernung und Geschwindigkeit, werden aus den Objektmerkmalen auch Metadaten, wie Objekt ist Fußgänger, Auto oder die Bedeutung eines Verkehrsschildes durch Klassifikation abgeleitet. Hierdurch erfolgt die teilweise nacheinander, häufig aber auch abwechselnd und rückgekoppelt, Objektdetektion, Objektbildung, Objektzuordnung, Objektverfolgung, und eine Objektattributierung sowie Objektklassifikation.

Durch die Objektdetektion bzw. Objektbildung werden aus den Daten der Sensorerfassung konkrete Objekte gebildet. Beim Radar 10 werden z.B. Reflexionspunkte, die nahe genug beieinander liegen und die gleiche Relativgeschwindigkeit besitzen, zu einem Objekt zusammengefasst werden. Ähnliches gilt für den Einsatz eines Lidar-Systeme zusammen oder getrennt mit einem Radar 10. Hier werden z.B. Scanpunkte, die die gleiche Entfernung besitzen und benachbart sind, im ersten Schritt zu einer Objekthypothese zusammengefasst. In 2D-Bildern des Kamerasensors 20 werden auf Basis der vom Radar und/oder dem Lidar detektierten Objektpositionen zur Objektbildung verschiedene Detektionsmethoden, die Merkmale wie Form, Farbe, Kanten, Histogramme aus der Bildanalyse oder auch den optischen Fluss im Objekttracking für den visuellen Sensor 41, eingesetzt. Gerade durch die Beschränkung der visuellen Objektdetektion auf die Bereiche, in denen bereits Objekte vom Radar und/oder Lidar detektiert wurden kann der Rechenaufwand insgesamt minimiert werden.

Die Objektzuordnung betrifft sowohl die Identifikation desselben Objektes in unterschiedlichen Sensordaten als auch die Objekttracking 31, 41 über die Zeit. Hierzu erfolgt eine genügend genau Orts- und Zeitkalibrierung der Sensoren 10 und 20. Es wird erfindungsgemäß unterschieden mit welcher Gewichtung, ob und wie die unterschiedlichen Sensorendaten vom Radar 10 und dem Kamerabild 23 verarbeitet werden. Beispielweise ist es angedacht die Sensordaten gewissermaßen gleichberechtigt oder mit einem Master-Sensor in der Ausgestaltung als Kamera, der notwendige und hilfreiche Zusatzinformation in Form von Fahrzeuginformationen 70 von anderen Sensoren zur Verifikation durch die erfindungsgemäße Vorauswahl von interessierenden Regionen durch Radar 10 im Bild zu werden. Hierbei wird berücksicht, dass ein minimal zu gestaltender Datenflusses bzw. ein minimales Datenaufkommen erzeugt wird. Die Objektverfolgung 31 und 41 berücksichtigt hierdurch die zeitliche Abfolge der Sensordaten und umfasst die Prädiktion des Bewegungsverhaltens von Objekten.

Die Situationsanalyse 32 und 42 definiert und beschreibt die Beziehungen zwischen den gefundenen Objekten, wie zum Beispiel Einscherer oder Gassenfahrt. Abhängig von der Komplexität der anzusprechenden passiven und aktiven Sicherheitssysteme 120 wie Abstandsanzeige, Abstandswarnung, Abstandsregeltempomat, Stauassistent, Notbremsung, usw. sind unterschiedliche Abstraktionsstufen bei der Situationsanalyse 32 und 42 wie Abstand zum vorausfahrenden Fahrzeug, Berücksichtigung der eigenen Geschwindigkeit, Einscherer-Situation, mögliche Ausweichmanöver angedacht. Neben den Daten aus der Umgebungserfassung ist es erfindungsgemäß angedacht Vorwissen z.B. aus digitalen Karten und Kommunikation mit anderen Fahrzeugen und/oder der Infrastruktur einzusetzen.

Die gesamte verfügbare Information über die aktuelle Situation wird in einer Objektbestätigung und Situationsanalyse 42 abgespeichert und steht allen anzusprechen passiven und aktiven Sicherheitssystem 120 über den Gefahrenrechner 90 und der Arbitrierung 100 zur Verfügung. Denn die abwägende Betrachtung der aktuellen Verkehrssituation mit der eigenen Aktionsplanung erlaubt eine Risikobewertung und somit eine entsprechende Handlungsableitung.

Diese Redundanz und Komplementarität trägt maßgebend zur Robustheit und Zuverlässigkeit der multisensoriellen Umgebungserfassung bei, da zwei Module zur Objekdetektion, Objektracking und zur Situationsanalyse 32, 43 beim dem System zum Einsatz kommen. Die Objektbestätigung und Situationsanalyse 42 dient die attributierten Objekte mit Meta- Information zu versehen. Ob ein detektiertes Objekt ein wichtiges Objekt ist oder nicht, erfolgt mit statistischen Klassifikatoren, die je nach verwendeter Sensorik 10, 20 eine Vielzahl von Merkmalen in der Entscheidung berücksichtigen.

Je nach Einstufung des Objektes erfolgt eine Aktivierung des Sicherheitssystem 120 in Form einer die Bremsanforderung an die Elekronischen Bremsen Kontrolleinheit 110 aus der radarbasierten Situationsanalyse, da statische oder dynamische Objekte 50 erkannt wurden.

Parallel werden wie bereits erwähnt zusätzlich Objekte erkannt, die nicht mit einem Radarsensor 10 messbar sind. So zum Beispiel Fahrspuren, die verwendet werden, um die Voraussage über das wahrscheinliche Verhalten erkannten Objektes, wie eines Fahrzeuges oder auch die des eigenen Fahrzeuges zu verbessern. Die Fahrspurfindung 22 nimmt eine aktive Rolle im Erkennungsprozess und wird beispielsweise mittels Kalmanfiltern umgesetzt. Durch Bekanntsein des Verlaufes der Spurmarkierung und der höheren lateralen Messgenauigkeit bei den erkannten Objekten, ist eine wesentlich differenziertere Eingriffsentscheidung möglich.

Basierend auf dem zuverlässigeren Situationsanalyse und deren Ergebnis ist es möglich wesentlich stärker als bisher in das Fahrverhalten des Fahrzeuges einzugreifen. Der bisher realisierte Bremseneingriff wurde aufgrund des unzureichenden Umfeldmodells freiwillig auf 0,3g begrenzt. Diese Begrenzung kann wegfallen oder zumindest nach oben verschoben werden. Vorteilhaft und sinnvoll erscheint zunächst eine Bremsung mit 0,6g, da der Bereich über 0,4g vom Fahrer als Gefahr wahrgenommen wird. Zusätzlich ist das System dann auch bei Regennasser Fahrbahn (mu=0,7)funktionsfähig. Bei höheren Verzögerungen könnte dann der Fahrer mit dem Fuß wieder ins Gaspedal fallen und somit den Eingriff abbrechen.

Darüber hinaus kann der Gefahrenrechner 90 zur weiteren Verbesserung der passiven Sicherheit in Abhängigkeit von dem ermittelten Gefahrenpotential Stellgrößen zum Schließen von Fahrzeugöffnungen 122 erzeugen. Vorzugsweise werden die Fenster und das Schiebedach 122 bei einem drohenden Unfall geschlossen. Steigt das Gefahrenpotential weiter und steht ein "Crash" unmittelbar bevor, so werden die Fahrzeuginsassen über einen elektromotorischen, reversiblen Gurtstraffer 121 gesichert und positioniert und es sinkt das Risiko der Insassen verletzt zu werden.

Vorteilhaft vorgesehen sind optische und/oder haptische Warn- und/oder Führungshinweise bzw. Handlungsanweisungen zum Warnen 123 und/oder Leiten des Fahrers zu einer an die aktuelle Fahrzeugsituation angepassten Fahrerreaktion. Die Warnhinweise erfolgen vorzugsweise mittels eines vibrierenden Pedals 124 und/oder vibrierenden Sitzes und/oder einer aktustischen und/oder visuellen Anzeige.

Die Führungshinweise werden mittels einer veränderten Bedienkraft an mindestens einem Pedal und/oder der Lenkhandhabe gegeben, so dass der Fahrer über die zu- oder abnehmende Bedienkraft zu situationsgerechter Fahrzeugführung veranlasst wird.

Die Funktionen des Gefahrenrechners 90 bestehen im wesentlichen in der Berechnung fahrdynamischer Kennzahlen, der Berechnung von Gefahrenpotentialen und der Berechnung der Ansteuersignale.

Mittels des Gefahrenrechners 90 wird die Situation in geeigneter Weise bewertet und die Gefahrenpotentiale bestimmt. Das Gefahrenpotential wird als dimensionslose Größe im Bereich zwischen 0 und 100 festgelegt. Das Gefahrenpotential ist abhängig von der Beschleunigung, die bei dem Fahrmanöver notwendig ist, dass durchgeführt werden muss, um den Unfall zu verhindern. Je größer die notwendige Beschleunigung ist ist, je gefährlicher ist auch die Situation und desto gefährlicher wird das Fahrmanöver von den Insassen wahrgenommen. Die Umrechnung von notwendiger Beschleunigung in Gefahrenpotential unterscheidet sich für Quer- und Längsbeschleunigung. Eine geringere notwendige Querbeschleunigung erzeugt ein höheres vergleichbares Gefahrenpotential.

Die passiven und aktiven Sicherheitssysteme werden lediglich aufgrund von Schwellenwertabfragen der Gefahrenpotentiale angesteuert. Dabei können mehrere Gefahrenpotentiale kombiniert werden, um einen passiven und aktiven Sicherheitssysteme zu aktivieren. Dies bedeutet, dass die Zustandsbewertung zunächst nicht die Auswahl bzw. die Betätigungsdosierung der passiven und aktiven Sicherheitssysteme beinhaltet. Dabei wird eine bestimmte Situation durch mehrere Gefahrenpotentiale bewertet. Dies lässt eine umfangreichere Bewertung der Situation zu. Es gibt Gefahrenpotentiale, die unabhängig von den passiven und aktiven Sicherheitssystemen die Situation bewerten. So kann es beispielsweise ein Gefahrenpotential geben, das den längsdynamischen Fahrzustand bewertet. Entsprechend gibt es ein allgemeingültiges Gefahrenpotential, das den querdynamischen Fahrzustand beschreibt. Im Gegensatz zu diesen allgemeingültigen Gefahrenpotentialen gibt es auf bestimmte passiven und aktiven Sicherheitssysteme zugeschnittene spezielle Gefahrenpotentiale. Diese Gefahrenpotentiale tragen der Tatsache Rechnung, dass unterschiedliche passive und aktive Sicherheitssysteme auch unterschiedliche Aktivierungszeiten haben. Das bedeutet, dass dieselbe Situation für einen passives und aktives Sicherheitssystem mit langer Aktivierungszeit vergleichsweise kritischer ist als für eines mit kurzer. Es gibt also allgemeingültige und speziell auf passive und aktive Sicherheitssysteme zugeschnittene Gefahrenpotentiale.

Die in dem elektronischen Steuersystem vorgesehene Arbitrierungseinheit 110 weist vorzugsweise einen Zustandsautomaten auf, der das Verhalten des Fahrers anhand von Größen, die den Gaspedalweg, die Gaspedalgeschwindigkeit und die Umsetzzeit zwischen Gas- und Bremspedal und/oder den Zustand (An/Aus) des Bremslichts und/oder gemessene und/oder berechnete Bremsdrücke der Bremsanlage und/oder der Fahrzeugbeschleunigung und/oder deren Ableitungen wiedergeben in Korrelation zu einem von dem Gefahrenpotentialen abhängigen Ansteuergrößen arbitriert und in Abhängigkeit von dem Ergebnis Bremsdruckvorgaben des Gefahrenrechners freischaltet. In Abhängigkeit von der Entwicklung des Gefahrenpotentials (Wert und/oder Gradient) kann der Stelleingriff, wie der Bremseneingriff, auch autonom, d.h. gegen den Fahrerwunsch, stattfinden. Der autonome Stelleingriff, wie Bremseneingriff, ist dabei bzgl. des Wertes der Stellgröße, wie dem Bremsdruck, begrenzt.

In Abhängigkeit von dem Zustand der Arbitriereinheit 100 werden dann Stelleingriffe für die Verzögerungseinrichtungen der aktiven und passiven Sicherheitssysteme des Fahrzeugs zur Verfügung gestellt, die verschiedene Bremsdruckanforderungen beinhalten, die von einer Vorbefüllung der Bremsanlage zur Verringerung der Ansprechzeit bis zur maximalen Bremsdruckeinsteuerung reichen.

Hierzu wertet der Zustandsautomat das Verhalten des Fahrers aus und schaltet davon abhängig Bremsdruckvorgaben des Gefahrenrechners frei. Ausgewertet wird im Wesentlichen die Fußbewegung des Fahrers. Diese lässt Rückschlüsse darüber zu, wie gefährlich der Fahrer die gleiche Situation einschätzt bzw. ob er überhaupt eine kritische Situation erkannt hat. Erst wenn der Fahrer diese kritische Situation bestätigt, wird Fahrer unabhängig Bremsdruck aufgebaut.

Abschließend soll noch einmal betont werden, dass es bei der Erfindung um eine Zielbestätigung handelt, da die Daten überprüft, verifiziert und bestätigt werden, um die Sensoren gegenseitig zu ergänzen, wodurch die Datenübertragung zwischen den Sensoren einfach zu realisieren ist und keine hohen systemtechnischen Anforderungen gestellt werden.

### Bezugzeichenliste:

- 1: Fahrzeug
- 10: Radar
- 20: Kamerasensor
- 21: Kamera
- 22: Fahrspurfindung
- 23: Kamerabild
- 30: Objektauffindung für Sensor 10
- 31: Objekttracking für Sensor 10
- 32: Situationsanalyse für Sensor 10
- 40: Perzeption für visuellen Sensor
- 41: Objekttracking für visuellen Sensor
- 42: Objektbestätigung und Situationsanalyse
- 43: Fahrspurprädiktion
- 50: stastische und dynamische Objekte
- 60: Relevante Obejkte
- 70: Fahrzeuginformation
- 80: Fahrerinformation
- 90: Gefahrenrechner
- 100: Arbitrierung
- 110: Elektronische Bremsen Kontrolleinheit (ECU)
- 120: Sicherheitssysteme
- 121: Gurte
- 122: Schiebedach, Fenster
- 123: Warnung
- 124: Pedalrückwirkung (Force Feedback Pedal FFP)

## Patentansprüche

1. System zur multimodalen Bestimmung von Objekten in einem vor und/oder hinter einem Fahrzeug liegenden Blickfeld, wobei mittels eines ersten Sensors (10) eine erste Umfelderfassung (30) durchgeführt wird, das Sensorausgangssignal einem ersten Sensorsignalanalyseverfahren mit Objektauffindung (31) zugeführt wird, und mittels eines zweiten Sensors (20) eine weitere Umfelderfassung durchgeführt wird, das zweite Sensorausgangssignal (23) einem zweiten Sensorsignalnalyseverfahrens mit Objektauffindung (41) zugeführt wird,
wobei durch die Sensoren (10, 20) erfasste und durch die Sensorsignalanalyseverfahren (31, 41) ermittelte und bestimmte Objekte einer Objektbestätigungs- und Situationsanalyse-Modul (42) zur Verifikation zugeführt werden, wobei zur Verifikation weitere Fahrzeuginformationen und die Fahrspurprädiktion (43) berücksichtigt werden, und das Objektbestätigungs- und Situationsanalyse-Modul (42) relevante Objekte (60) bestimmt, wobei durch die relevanten Objekte (60) und die Fahrerinformation (80) bei Erkennung einer Gefahrensituation durch den Gefahrenrechner (90) Maßnahmen zur Erhöhung der passiven Sicherheit (120) eingeleitet werden,
**dadurch kennzeichnet,**
**dass** eine Bremsstrategie mit mindestens 0,3g mit einer Erhöhung der Verzögerung kurz vor dem Stillstand über die Sicherheitssysteme (120) erfolgt.

2. System nach Anspruch 1
**dadurch gekennzeichnet,**
**dass** der erste Sensor (10) ein Radarsensor und der zweite Sensor (20) ein visueller Sensor ist, wobei die Sensoren unterschiedlichen Bereich des elektromagnetischen Wellenspektrums erfassen und das System in einem Fahrerassistenzsystem mit Frontsensorik integriert wird.

3. System nach Anspruch 2,
**dadurch gekennzeichnet**,
das der erste Sensor (10) ein Radarsensor und der zweite Sensor (20) eine Kamera ist.

4. System nach einem der vorangegangen Ansprüche 2 oder 3,
**dadurch gekennzeichnet,**
**dass** eine Minimierung des Datenflusses zwischen den Sensoren durch die Vorauswahl von relevanten Objekten im Radar (10) erfolgt.

## Claims

1. A system for the multimodal determination of objects in a field of vision that is in front of and/or behind a vehicle, wherein a first covering (30) of the surroundings is performed by means of a first sensor (10), the sensor output signal is supplied to a first sensor signal analysis method with object detection (31), and a further covering of the surroundings is performed by means of a second sensor (20), the second sensor output signal (23) is supplied to a second sensor signal analysis method with object detection (41),
wherein objects detected by the sensors (10, 20) and ascertained and determined by the sensor signal analysis methods (31, 41) are supplied to an object confirmation and situation analysis module (42) for verification, wherein further vehicle information and the traffic lane prediction (43) are taken into consideration for verification, and the object confirmation and situation analysis module (42) determines relevant objects (60), wherein measures for increasing passive safety (120) are initiated by the relevant objects (60) and the driver information (80) when the danger calculator (90) detects a dangerous situation,
**characterized in that**
a braking strategy with at least 0.3 g with an increase in deceleration shortly before standstill by means of the safety systems (120) is performed.

2. The system according to claim 1,
**characterized in that**
the first sensor (10) is a radar sensor and the second sensor (20) is a visual sensor, wherein the sensors cover different ranges of the electromagnetic wave spectrum and the system is integrated in a driver assistance system having a front sensor system.

3. The system according to claim 2,
**characterized in that**
the first sensor (10) is a radar sensor and the second sensor (20) is a camera.

4. The system according to any one of the preceding claims 2 or 3,
**characterized in that**
the data flow between the sensors is minimized by the preselection of relevant objects in the radar (10).

## Revendications

1. Système de détermination multimodale d'objets dans un champ de vision situé devant et/ou derrière un véhicule, une première détection de l'environnement (30) étant effectuée au moyen d'un premier capteur (10), le signal de sortie du capteur étant conduit à un premier procédé d'analyse de signal de capteur avec découverte d'objet (31), et une autre détection de l'environnement étant effectuée au moyen d'un deuxième capteur (20), le deuxième signal de sortie du capteur (23) étant conduit à un deuxième procédé d'analyse de signal de capteur avec découverte d'objet (41),
des objets détectés par les capteurs (10, 20) et déterminés et définis par les procédés d'analyse de signal de capteur étant conduits à un module de confirmation d'objet et d'analyse de situation (42) pour vérification, d'autres informations de véhicule et la prédiction de voie (43) étant prises en compte pour la vérification, et le module de confirmation d'objet et d'analyse de situation (42) définissant des objets pertinents (60), des mesures destinées à augmenter la sécurité passive (120) étant mises en oeuvre par les objets pertinents (60) et l'information du conducteur (80) lors de l'identification d'une situation de risque par le calculateur de risque (90),
**caractérisé en ce**
**qu'**il s'ensuit, par le biais des systèmes de sécurité (120), une stratégie de freinage avec au moins 0,3 g avec une augmentation du ralentissement peu avant l'arrêt.

2. Système selon la revendication 1,
**caractérisé en ce que**
le premier capteur (10) est un capteur radar et le deuxième capteur (20) est un capteur visuel, les capteur détectant une zone différente du spectre d'ondes électromagnétiques, et le système étant intégré dans un système d'assistance au conducteur avec ensemble de capteurs frontaux.

3. Système selon la revendication 2,
**caractérisé en ce que**
le premier capteur (10) est un capteur radar et le deuxième capteur (20) est une caméra.

4. Système selon une des revendications précédentes 2 ou 3,
**caractérisé en ce**
**qu'**il s'ensuit une minimisation du flux de données entres les capteurs par la présélection d'objets pertinents dans le radar (10).
